# EUROPEAN PATENT APPLICATION

(11) **EP 4 682 462 A1**
(43) Date of publication of application: **21.01.2026**
(21) Application number: 24188984.9
(22) Date of filing: 16.07.2024
(51) Int. Cl.: G01B 5/008, G01B 11/00, G01B 21/04, B25J 9/00, B25J 9/06, B25J 9/16

(54) **MEASUREMENT ACCURACY PERCEPTION AND USER GUIDING FOR MANUALLY DRIVEN ARTICULATED ARM COORDINATE MEASURING MACHINE**

(71) Applicant: Hexagon Innovation Hub GmbH, 9435 Heerbrugg (CH)
(72) Inventor: REIMANN, Bernd, CH-9435 Heerbrugg (CH); SCHEJA, Jochen, 6845 Hohenems (AT); DESFORGES, Laurent, 41310 Ambloy (FR)
(74) Representative: Kaminski Harmann

(57) **Abstract**

The invention relates to an articulated coordinate measuring machine comprising a set of sensors, a probe for approaching an object point, and a set of members connecting the probe to a base. The probe is configured to be moved at least partially manually by an operator holding and guiding the probe and/or a handheld member of the set of members. The coordinate measuring machine comprises (i) an accuracy-assessment-functionality providing accuracy-perception-data based on continuously monitored actual data representing an actual state of said at least one state variable of the coordinate measuring machine during the guiding of the probe, and (ii) a user-support-functionality providing a support action during the guiding of the probe based on the accuracy-perception-data.

## Description

### FIELD OF THE INVENTION

The invention relates to an operator action sensor for a substantially manually driven articulated arm coordinate measuring machine (AACMM), the CMM with the operator action sensor and the operation of said CMM. The CMM comprises a probe for approaching an object point, and a set of members connecting the probe to a base. The probe is moved at least partially manually by an operator exerting a force or torque on a hand-controlled member of the set of members.

### BACKGROUND OF THE INVENTION

A CMM is a machine configured to measure 3D coordinates of certain points, in particular the whole surface topography, of a workpiece. CMMs are important in various industries, e.g., production measurement, quality control, or reverse engineering. They are utilized, e.g., to determine deviations of the geometry of manufactured products from design models, in particular to determine whether the deviations are within the manufacturing tolerance. Another application of a CMM gaining more prominence is the reverse engineering of an object, where no design model exists, but an operator provides a guidance of the probe.

Portable measurement arms offer a flexible, time and cost-efficient solution for such measurement tasks. Portable measurement arms comprise a base connecting the machine to a typically inert support structure, a set of articulated elements, a set of internal sensors providing data regarding the state of said elements, a probe interface configured to accommodate a probe, typically in an exchangeable manner, and one or more probe. The probe is configured to interact with the workpiece in tactile and/or in non-contact manner and (relative) coordinate data regarding an object point on the workpiece is derived based on the state of the articulated elements and a data provided by the probe.

Many designs are at least theoretically feasible for the types and arrangement of the articulated elements of portable measurement arms. However, practical considerations, e.g., the need for ultra-high accuracy, low weight, large accessible volume, lead to a preferred embodiment, in which the arm comprises a series of hinges and elongated cylindrical segments with parts allowing rotation about their axes. Most of the above-mentioned elements are non-motorized, i.e., the probe head is manually guided and a decisive part of the driving force for the movement of the articulated elements is provided by the muscle power of the operator.

Segments provide at least partial rotatability about an axis substantially parallel to a longitudinal axis of the segments, in particular a distal portion of the segments might be rotatable with respect to a proximal portion. The segments thus comprise a metrological link - e.g., a substantially rigid member - and a metrological joint. Hinges provide at least partial rotatability about an axis which is angled with respect to the axes of the connected segments, in particular perpendicular thereto. Contemporary AACMMs use one degree of freedom articulated elements, due to improved pose reproducibility and measurement accuracy. Nonetheless, the respective one-dimensional joints are often placed in the proximity of each other creating an effectively multi-dimensional transfer element.

To achieve a large accessible volume and/or to provide alternative measurement path AACMMs are typically underdetermined as mechanical systems. I.e., the same probe posture can be realized by many different postures of the articulated elements. Nevertheless, the measurement accuracy of the AACMM show large differences in the different postures. For example, it is preferable that the encoders are aligned parallel to or orthogonal to the direction of gravity.

Due to the comparably lower costs and the purported ease of use such portable measurement arms are often used in factory floor environments. Moreover, the operators often lack well-founded metrology knowledge and/or extended training regarding the proper usage of the portable measurement arm. Wrong handling of the arm can massively reduce the measurement performance of an articulated arm. Inaccuracy may arise from improper pose of the articulations, e.g., wherein external forces or the operator's body heat might temporarily or permanently deform the arm, which leads to measurement errors. Inaccuracy may also arise from improper handling of the pose changes. I.e., to reach an optimal relative accuracy between measurement points the axis motion should be as small as possible. With large encoder displacement axis inaccuracies have a negative impact on the measurement accuracy.

Another important aspect, especially when measuring large objects or objects with difficult-to-access interior spaces, is that the quality of the overall measurement data can be compromised by one or more inaccurately measured object points. In the prior art system such compromised object points are only uncovered during the post-processing of the data, when the compromised data cannot be easily reacquired.

### OBJECT OF THE INVENTION

In view of the above circumstances, one object of the present invention is to improve the handling of manually guided AACMMs.

A second objective of the present invention is to shorten the training required to achieve the required skills for the operator of AACMMs.

A third objective of the present invention is to provide a near real-time assessment and feedback regarding the measurement accuracy of coordinate acquisition.

These objectives are at least partly achieved by realizing the characterizing features of the independent claims. Features, which further develop the invention in an alternative or advantageous manner are described in the dependent claims.

### SUMMARY OF THE INVENTION

The invention relates to a CMM, more particularly a substantially manually driven, AACMM. Substantially manually driven in the sense of the invention means that the operator of the AACMM touches one or more components of the measuring arm and guides the probe thereby.

The AACMM comprises a set of sensors, a probe for approaching an object point, a set of members connecting the probe to a base. The members comprise links and joints. One of the members might be embodied as or might comprise a probe interface configured to accommodate a probe in an exchangeable manner.

The probe is configured to be moved at least partially manually by an operator holding and guiding the probe and/or a handheld member of the set of members. The probe is configured to measure probing data corresponding to an interaction between the probe and the object point. The probe might be a tactile probe configured to provide probing data by mechanically interacting with the object point. However, the invention is equally applicable to AACMMs equipped with non-contact probes such as triangulation sensors, laser scanners or ultrasound probes. The probe, probe interface, or the handheld member might comprise an operator interaction element configured (a) to provide a better grip for the operator and/or (b) to enable an activation of direct operator commands.

At least one sensor in the set of sensors might be associated with at least one of the articulated elements and configured to provide sensor data regarding the at least one associated element. In particular, at least the rotation state of each of the articulated elements is tracked by the appropriate sensors. One or more articulated elements might be associated with a plurality of sensors.

At least one sensor in the set of sensors, in particular the displacement and/or force measuring sensors, might provide sensor data regarding a plurality of the articulated elements.

Sensor in the sense of the invention might be realized as a distributed sensor comprising a plurality of physically distinct sensor components and the sensor data are provided by the assembly as a whole.

The CMM is configured to derive a pose of the probe based on sensor data provided by the set of sensors and to provide coordinate data of the object point based on the probing data and the pose of the probe. Coordinate data might be relative coordinates to further object points in the environment.

The CMM is further configured (i) to obtain target data representing a target state of at least one state variable of the CMM, (ii) to derive actual data representing an actual state of said at least one state variable based on sensor data provided by the set of sensors, and (iii) to continuously monitor the actual data.

The CMM further comprises an accuracy-assessment-functionality. The accuracy-assessment-functionality is configured to provide accuracy-perception-data based on the continuously monitored actual data and the target data during the guiding of the probe and/or the handheld member. The accuracy-assessment functionality might provide the accuracy-perception data in the form of numerical values, particularly as confidence value or confidence range regarding the pose of a component of the AACMM. Said component might be the probe. By way of example such data can be useful for experienced operator when deciding whether to re-acquire the previously performed measurement.

The accuracy-assessment-functionality might provide the accuracy-perception-data as an assessment regarding the "proper usage". Particularly the accuracy-assessment-functionality might compare a modelled accuracy of the actual posture of the CMM with the modelled accuracy of an alternative posture realizing the same probe pose. In particular, the accuracy-perception-data can be generated as compliance with a tolerance band for accuracy. By way of example such data might be useful during the training of operators.

The CMM further comprises a user-support-functionality being configured to provide a support action during the guiding of the probe and/or the handheld member based on the accuracy-perception-data. Preferably the user-support-functionality provides the support action in near real time.

In some embodiments, the CMM further comprises an accuracy-optimization-functionality. The accuracy-optimization-functionality is configured (i) to access a training database comprising training data regarding a plurality of recorded pose uncertainties associated with corresponding recorded states of at least one state variable, (ii) to derive a model pose uncertainty associated with at least one nonrecorded state of the at least one state variable, and (iii) to derive the target data based on the training database. The derived target data are associated with one recorded pose uncertainty or one model pose uncertainty below an uncertainty threshold. The accuracy-optimization-functionality is configured (i) to derive at least one model pose uncertainty associated with at least one nonrecorded state of the set of state variables, (ii) to derive a target state of the plurality of state variables based on the training database. It is self-explanatory that numerals and letters, like above, do not represent e.g., a sequence of performing the steps, not even in the form of a preferred sequence, or any spatial, temporal, or causal connections and merely serve the purpose of readability. Unless expressly provided for reasonable variations of steps of method and/or spatial arrangement of device components are within the scope of the invention.

In some specific embodiments, the training database comprises training data regarding a plurality of recorded pose uncertainties associated with corresponding recorded states of sets of state variables, the set of state variables comprising a plurality of state variables. In other words, the CMM is configured to provide an accuracy space, particularly a multivariable space, and derive at least one point, particularly a domain comprising a plurality of points, as a target within said space. By way of example such multivariable space might relate to the attitude of the articulated members. In some cases, specific poses or pose-areas can be predefined as less accurate or un-desired.

In some specific embodiments, the CMM comprises a neural network and/or is configured to establish an operative coupling with a neural network. The neural network is configured to execute the computational steps of the accuracy-assessment-functionality and/or the accuracy-optimization-functionality. Undesired poses or pose-areas might be provided to the neural network as input data or used separately, e.g. as hardcoded un-desired poses or pose-areas.

In some embodiments, the CMM comprises an operator action sensor. The operator action sensor is configured to provide data regarding a force and/or a torque exerted by the operator on the probe and/or the handheld member. The target data comprise data corresponding to a force and/or torque threshold. The actual data comprise data corresponding to the measured force and/or torque exerted by the operator. The support action might comprise a warning of excessive force and/or torque exerted by the operator. Such operator action sensors might be mounted on the probe, the probe interface or on the handheld member. The operator action sensor or a further sensor might comprise accelerometers providing sensor data regarding a dynamic behavior of the CMM.

In some specific embodiments, the operator action sensor comprises a grip surface configured to be held by the operator during the guiding of the probe and/or the handheld member. The target data comprise data corresponding (i) to a grip threshold and (ii) to a rate of change threshold, in particular wherein the rate of change threshold corresponds to a linear or angular velocity of the probe. The actual data comprise data corresponding to (i) the measured force and/or torque exerted by the operator, and (ii) the measured rate of change of the pose of the probe. The support action might comprise a suggestion for an amended grip by the operator. In other words, the CMM monitors whether the operator guides the probe via the grip surface configured for this purpose. In the case when the probe moves despite a lack of force at the grip surface the CMM could provide feedback.

In some embodiments, the CMM is configured to derive an orientation of at least one link from the set of members based on sensor data provided by the set of sensors. The target data comprise data corresponding to a target orientation or orientation domain of said link. The actual data comprise data corresponding to a measured orientation of said link. The support action might comprise a warning of non-optimal orientation of the link. It is known that for many sensor optimal accuracy is achieved if the sensor has a specific orientation with respect to the gravity vector. A direction of gravity can be determined independently at each metrology joints. Alternatively or additionally to the feedback, commands might be provided to the motorized joints to approach the target attitude.

In some specific embodiments, the CMM is further configured (i) to obtain workpiece model data, (ii) to perform a matching of measured coordinate data of a set of object points with the workpiece model data, (iii) to provide an assessment regarding a predicted object point based on said matching, particularly on the base of measurement sequences stored in the database or a measurement sequence derived on the basis of a training database, and (iv) to provide a predicted pose of at least one monitored member from the set of member based on the predicted object point. The target data comprise data corresponding to a target path towards the predicted pose of the monitored member. The actual data comprise data corresponding to a measured or modelled actual pose of the monitored member.

In some specific embodiments, the target data are provided by the accuracy-optimization-functionality. Alternatively or additionally, the support action comprises (i) an orientation aid to guide the probe and/or the handheld member of the set of members to realize target path towards the predicted pose of the monitored member, particularly a motorized orientation aid performed automatically, and/or (ii) a workpiece placement aid comprising a suggested placement of the workpiece relative to the coordinate measuring machine, and/or (iii) workpiece identification and an object point aid based on the detected workpiece comprising a suggested object point on the workpiece, in particular wherein the suggested object point corresponds to a stored object point from a stored measurement and/or a derived object point derived on the basis of the training database.

In some specific embodiments, the CMM comprises an internal perception sensor. The internal perception sensor is arranged or integrated to the CMM. The internal perception sensor is configured to provide spatial arrangement data regarding an environment of the CMM. By way of example, the CMM might be configured to obtain the workpiece model data based on the spatial arrangement data.

In some specific embodiments, the CMM is configured to access data from an external perception sensor external to the CMM. The external perception sensor is configured to provide spatial arrangement data regarding an environment of the CMM. The external and internal perception sensors might be used in combination. The CMM is also configured to obtain the workpiece model data based on the spatial arrangement data. Workpiece data in the sense of the invention comprises partial data, particularly data required for workpiece identification. A non-exclusive list of such data might be a specific face, particularly the front, an unambiguous area, a serial number, or QR code.

In some specific embodiments, the CMM comprises a crash-protection functionality. The crash-protection functionality is configured to provide an assessment regarding a collision of at least one member with an object in the environment based on the spatial arrangement data and the predicted pose of the at least one member. The CMM comprises a brake configured to hinder, or to lock, the movement of at least one braked member based on the assessment regarding a collision of at least one member.

In some embodiments, the CMM comprises at least one motorized member and a servo-functionality. The motorized member is configured to provide a servo-torque. The servo-functionality is configured to set the servo-torque with respect of the actual and predicted pose of the monitored member.

In some embodiments, the set of sensors comprises a temperature sensor. The at least one state variable is a temperature of at least one member and/or a temperature of the probe. The support action comprises a suggestion for an amended grip by the operator. Particularly, via a temperature sensor the CMM can provide an assessment regarding a false grip of the operator, wherein the body heat of the operator might cause a temperature above the accuracy threshold of one of the sensors. Alternatively or additionally, the detected heat might be an indicator of further influencing factors, e.g., a possible bending of one of the links.

In some embodiments, the CMM is configured to access an operator database. The operator database comprises an operator identifier and data regarding a history of operator behavior. The CMM is configured to associate a current operator with one of the operator identifiers, in particular automatically based on a comparison of current operator behavior with the history of operator behavior. The accuracy-perception-data are provided further based on current operator behavior and of the history of operator behavior. By way of example, the typical measurement gestures/patterns might be different for taller operator than a shorter one and the support action can be provided with respect of the preferred measurement gestures/patterns.

In some specific embodiments, the CMM is configured (i) to record the current operator behavior, and (ii) to adapt the history of operator behavior based on the recorded current operator behavior. The CMM might provide an assessment regarding an evolution of the operator behavior, particularly for training purposes for the operator.

### BRIEF DESCRIPTION OF THE DRAWINGS

By way of example only, specific embodiments of the invention will be described more fully hereinafter with reference to the accompanying figures, wherein:
Figure 1a shows a generic AACMM.
Figures 1b and 1c show measurements wherein an operator guides the probe and a handheld member.
Figure 2 depicts, by a flowchart, a method for determining of coordinate data.
Figure 3 depicts, by a high-level flowchart, key elements of the inventive control algorithm.
Figure 4 schematically depicts a derivation of target data based on a training database.
Figure 5 depicts an exemplary embodiment of an operator action sensor.
Figure 6 depicts an embodiment of the inventive control algorithm, wherein the proper grip is verified.
Figure 7 depicts, by a flowchart, an embodiment, wherein the measured coordinate data are matched with a workpiece model data from a database.
Figure 8 schematically depicts the provision of spatial arrangement data by internal and external perception sensors.
Figure 9 schematically depicts the management of an operator database.

### SPECIFIC EMBODIMENTS OF THE INVENTION

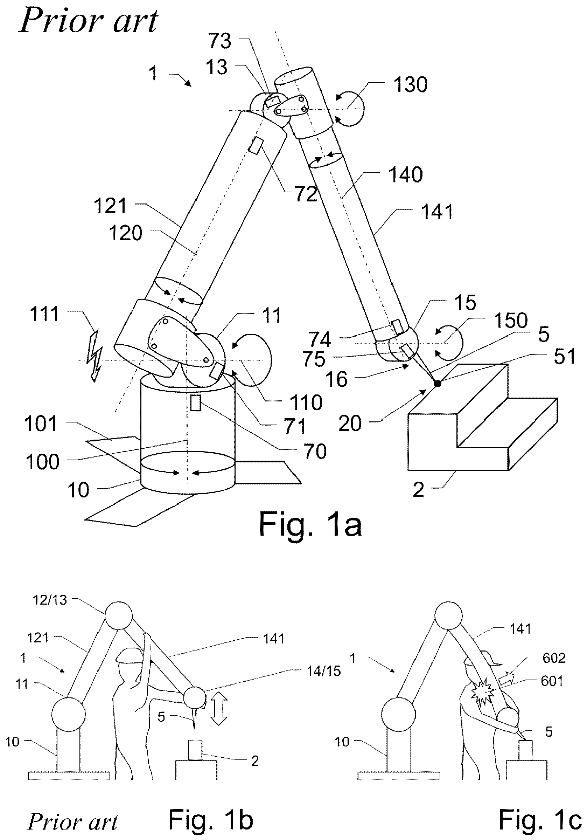

Figure 1a shows a generic AACMM **1** performing a coordinate measurement on a workpiece **2.** The depicted AACMM is equipped with a tactile sensor as the probe **5** mounted on the probe interface **16.** I.e., the operator performs the coordinate measurement by touching an object point **20** with a tactile sensing element **51,** depicted as ruby sphere. The AACMM **1** comprises a base **10** with fixing elements **101,** e.g., permanent magnets, screws, pneumatic components etc., configured to provide a mechanical coupling with the environment in a fixed pose relative to the workpiece. The AACMM **1** also comprises a set of articulated members **11,13,15,121,141** connecting the probe **5** to the base **10.** The articulated members **11,13,15,121,141** comprise links **121,141** and joints **11,13,15.**

In the depicted embodiment each of the joints **11,13,15** and the base **10** provides a rotational degree of freedom about respective axes **100,110,120,130,140,150.** The links **121,141** are elongated cylinders and the axes of rotation **120,140** of the segment joints (not shown) correspond to the direction of elongation. The further joints **11,13,15** are depicted as hinges providing a rotation about an axis perpendicular to the axes **100,120,140** of the base **10** and/or of the links **121,141.** The side of the joints **11,13,15** kinematically closer to the base **10** has a fixed spatial relationship with the respective proximal component. The AACMM **1** comprises a set of internal sensors **70-75.** Each sensor is associated with at least one of the members **11,13,15,121,141** and provides actual joint and/or actual link data. In the depicted embodiment the first joint **11** is motorized **111,** i.e., the AACMM **1** is configured to provide a servo-torque for the first joint **11** in response of operator actions. While many features are illustrated with embodiments like the one depicted in Figure 1a, the claimed invention is not limited to this embodiment.

Figure 1b-1c depicts a measurement routine, where coordinates of a workpiece **2** are determined by an AACMM **1** having a probe **5** with a tactile sensing element. The depicted AACMM comprises a set of members **11-15,121,141** connecting the probe **5** to a base **10.** For simplicity the depicted links **121,141** are considered as essentially rigid members, while some of the depicted joints **11-15** are considered to provide mobility of more than one degree of freedom. To ensure the highest possible accuracy, the attitude of the members **11-15,121,141** and the probe **5** should be consistent throughout the measurement. This can be achieved using the depicted method, wherein the members **11-15,121,141** and the probe **5** are constrained to a vertical plane, by the operator holding the second link **141,** or alternatively the probe **5** vertically. For this, however, the operator either must grip the second link **141** far from the probe, as depicted, or must exert excessive torque. Both are tiresome; thus the operator is tempted to support the handheld member **141** on the shoulder. This however could result in a deformation of the second link **141** by bending **602** or through body heat **601** causing a temporary or permanent loss of accuracy for the AACMM 1.

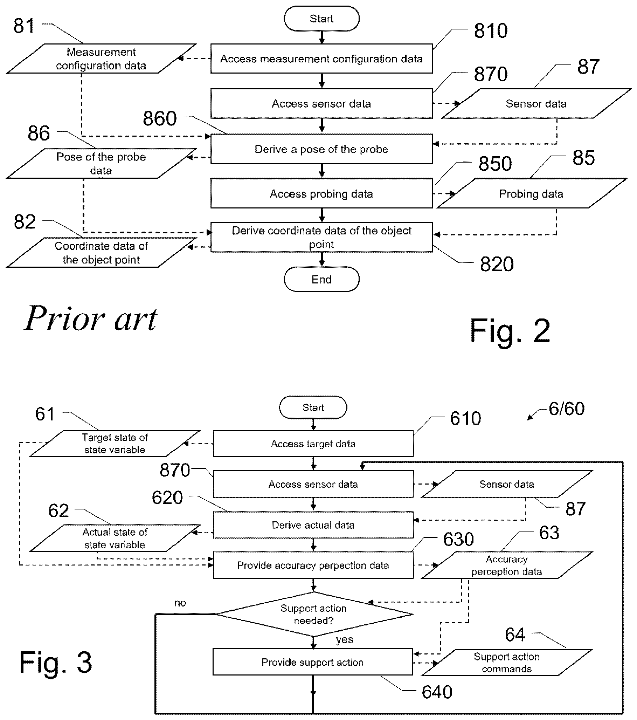

Figure 2 illustrates a generic method of deriving **820** coordinate data **82** of the object point by a flowchart. Command/flow-lines shown as bold and data-lines as dashed arrows. The skilled person understands that the depicted flowcharts focus on the essential features and the actual embodiments comprise further, non-depicted elements, in particular command or data elements and/or data transfer lines. Moreover, command or data modules might be depicted in a simplified form due to reasons of clarity and conciseness. Unless where otherwise provided, or where a distinction provides a notable effect the data elements and the related real-world objects are labelled with the same reference signs.

In a first step measurement configuration data **81** representing the geometry, in particular the metrology chain, of the CMM and sensor data **87** is accessed **810/870.** The sensor data **87** is representative of at least a relative motion, preferably a relative pose, provided by the articulated elements. Based on the measurement configuration data **81** and the sensor data **87** a pose of the probe **86,** preferably an absolute pose of the probe, is derived **860.** In a next step the probing data **85** is also accessed **850.** The probing data **85** might comprise interaction information between the probe and the object point, e.g., a distance of the two. Based on the pose of the probe **86** and the probing data **85** coordinate data **82** of the object point is derived **820.** There are many variations and alternatives of the here depicted method in the state of the art and the claimed invention is not limited to any specific embodiment.

As can be seen the pose of the probe **86** is determined based on a metrology chain comprising a plurality of sensors and/or non-measured nominal data, e.g., a length of a link. Inaccurate sensor data **87** thus propagates through the chain leading to inaccurate coordinate **82** measurements. Such inaccuracy might arise due to inherent sensor inaccuracy e.g., due to sub-optimal attitude of the sensor and/or dynamic effects. Inaccuracy can also arise due to unknown factors such as non-measured bending of the links.

Figure 3 depicts, by a high-level flowchart, the concepts of the inventive accuracy-assessment-functionality **6** and user-support-functionality **60.** Some aspects will be discussed in more detail in the further figures. In a first step target data **61** representing a target state of at least one state variable of the coordinate measuring machine are obtained **610.** By way of example, state variables can be the attitudes, (linear) velocities, angular velocities, respective accelerations of one or more articulated members or the probe, respective thermodynamic or operational data, particularly data relating to a malfunction, of one or more components, component identification data. State variables can also represent environment data, particularly the pose of one or more components with respect to objects in the environment, in particular the workpiece. State variable can also represent operator related data, such as operator identification data or forces and torques exerted by the operator on one or more of the components. The above list is non-exhaustive. In typical cases the target data **61** comprise data relating to target states of a plurality of state variables. For reasons of brevity and transparency many of the depicted examples will disclose cases with target data relating to a single state variable. The features of the embodiments with a plurality of state variables can be applied accordingly.

In the following steps sensor data **87** are accessed **870** and actual data **62** relating to the actual state of the state variable are derived **620.** The accuracy perception data **63** are provided **630** based on the actual data **62** and the target data **61.** Based on the accuracy perception data **63,** alternatively or additionally on the target **61** and actual data **62,** it is inspected whether a support action **64** is required. If needed a support action **64** is provided **640.** Support actions **64** in the sense of the invention might be alerts/warnings provided, particularly displayed, to the operator. Support actions **64** might also represent active measures, such as adjusting a joint. The depicted algorithm is running continuously. While not shown, it is evident that the target data **61** might be re-accessed **610** in certain steps.

By way of example the target state of the state variable might represent a state of the CMM with sufficient measurement accuracy, i.e., when the actual state of the state variable corresponds to the target state the accuracy perception data might be a flag with a "true" value, thus no support action **64** is needed. Further cases will be discussed in the following figures.

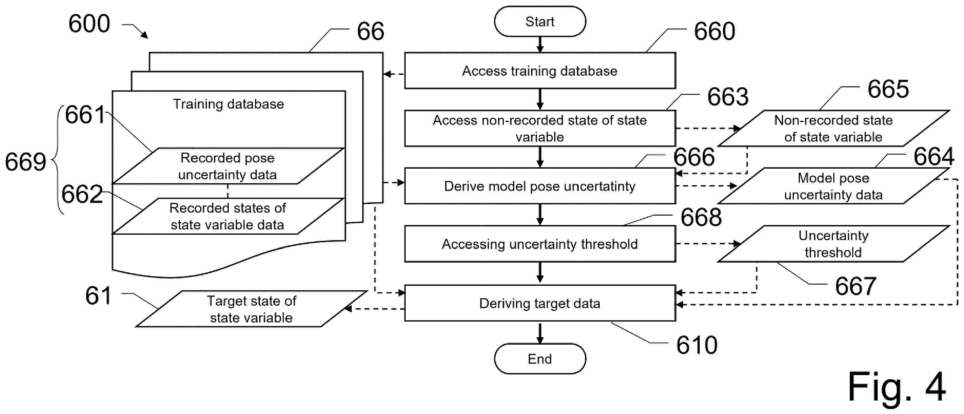

Figure 4 depicts, by a flowchart, an embodiment of the accuracy-optimization-functionality **600** deriving **610** the target data **61** based on a training database **66.** In a first step a training database **66** is accessed **660.** The training database **66** comprises training data **669** regarding a plurality of recorded pose uncertainties **661** associated with corresponding recorded states **662** of one or more state variables. In a next step a non-recorded state **665** of the one or more state variables is accessed **663.** A corresponding model pose uncertainty **664** associated the nonrecorded state **665** of the one or more state variables is derived **666** based on the training database **66.** In a following step an uncertainty threshold **667** is accessed **668.** The target data **61** is derived **610** based on the training database **66,** such that target data **61** is associated with one recorded pose uncertainty **661** or one model pose uncertainty **664** below an uncertainty threshold **667.** The target data **61** might also represent a plurality or a continuum of states of the state variables associated with pose uncertainties below the threshold **667.**

By way of example, the training database **66** might be created to contain recorded states **662** with only the lowest pose uncertainties, however with sub-optimal reach. For a measurement of large object with less stringent accuracy requirements a new domain of allowed states comprising previously non-recorded states **665,** wherein the associated model pose uncertainty **664** fulfils the less stringent threshold **667** might thus be derived from the existing training database **66.** This allows the possibly inexperienced operator to carry out the measuring task without relying on own intuition.

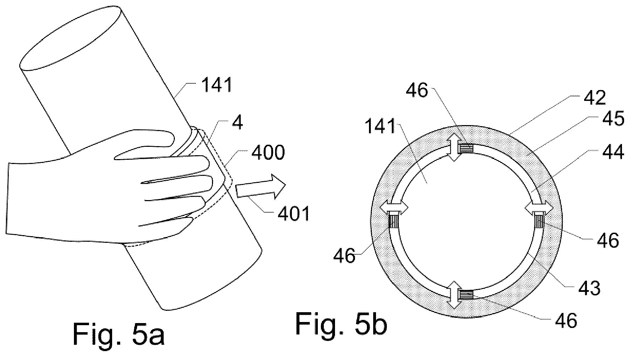

Figure 5a depicts an embodiment of an operator action sensor **4** as a touch sensitive band mounted to the hand-controlled member **141.** The depicted the hand-controlled member **141** is the second link, which is kinematically close to the probe. The depicted operator action sensor **4** is mounted such that it is concentric to the handheld member **141** in a rest state and elastically displaceable to a displaced state. The measured displacement **400** comprises information regarding a force **401** or torque exerted by the operator.

Figure 5b depicts a cross-sectional view of the operator action sensor. The operator action sensor comprises a grip surface **42** configured to be held by the operator guiding the handheld member **141.** The operator action sensor also comprises an inner surface **43** configured to interact with the handheld member **141,** an internal volume **44** comprising a sensing element **46.** The sensing element **46** is configured to provide data regarding the force or torque exerted by the operator. The depicted operator action sensor further comprises a thermal isolation region **45** configured to provide a thermal isolation between the inner **43** and the outer surfaces **42.** Alternatively or additionally, the operator action sensor might be configured such that it provides force measurement axial to the link acting as the handheld member **141.**

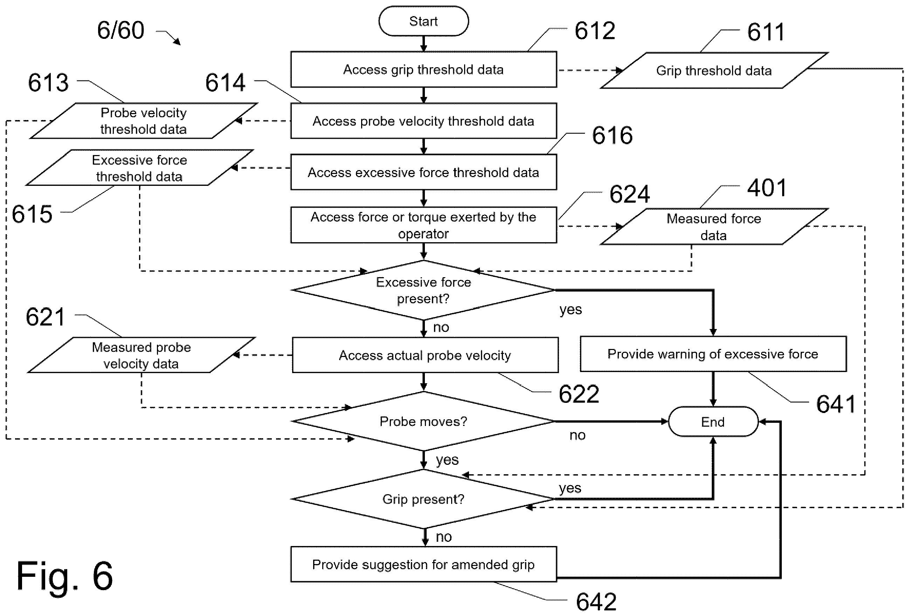

Figure 6 depicts an embodiment of the inventive accuracy-assessment-functionality **6** and user-support-functionality **60.** In the depicted embodiment the proper grip is verified, in particular, whether the operator is holding the probe and/or the hand-held element using the intended gripping surface and whether the applied force or torque corresponds to proper actuation. Preferably a correction is derived and applied based on the applied force or torque and an existing compensation model or training data. The applied correction at least partially compensates the deformation and/or the effects arising from the deformation. Alternatively or additionally, a user warning will be provided, e.g. when the applied force is too high.

The functionality **6/60** accesses **612,616** a first force threshold **611** corresponding to a minimal force associated with a proper grip and second force threshold **615** corresponding to an excessive force applied to guide the probe. A movement threshold **613** corresponding to a definite movement of the probe is also accessed **614.** Then the force **401** or torque applied by operator is measured **624,** particularly via an operator action sensor, e.g., similarly to the embodiment depicted in Figure 5. A measured or modelled velocity **621** of the probe is also provided **622.** The skilled person knows many possibilities to determine said velocity. A non-exhaustive list comprises the use of the sensors of the metrology chain, internal inertial sensors, tracking of the probe by external sensors, tracking the environment by a sensor moving with the probe. The present invention is applicable in principle with any of the listed options, suitable alternatives or combinations thereof.

The depicted embodiment foresees two support actions. If measured forces **401** or torques above the excessive force threshold **615** are detected an excessive force warning **641** is provided. If a definitive movement of the probe is determined without the presence of a corresponding grip force suggestions for an amended grip **642** are provided. The depicted functionality can also be performed in a loop.

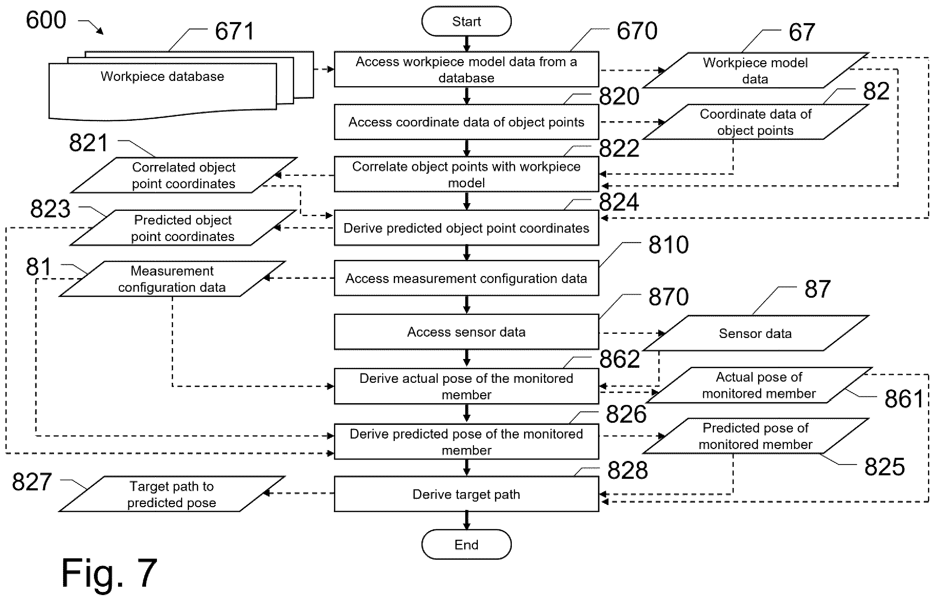

Figure 7 depicts another embodiment of the accuracy-optimization-functionality **600,** wherein a target path **827** of a monitored component from an actual pose **861** to a predicted pose **825** is provided **828.** The actual pose is provided **862** based on accessed **810/870** measurement configuration **81** and sensor data **87** in a manner depicted in Figure 2. The predicted pose **825** is provided **826** based on matching **822** a workpiece model **67** from a database **671** with measured **820** coordinates **82** of object points. Based on the matched coordinates **821,** as well as the workpiece model data **67,** particularly typical measurement sequences used to obtain the still missing coordinates, predicted object point coordinates **823** are provided **824.** The predicted pose **825** of the monitored member is provided based on the measurement configuration data **81** and the predicted object point coordinates **823.** While not explicitly shown on the illustration it is clear that both the predicted pose **825** of the monitored member as well as the target path **827** corresponds to states which fulfill the measurement accuracy requirements.

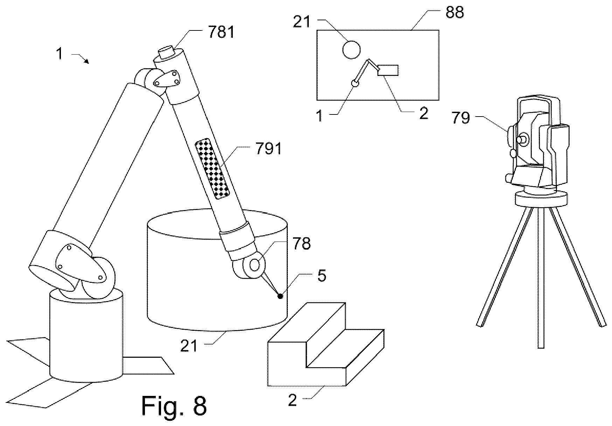

Figure 8 depict the CMM **1** in an environment comprising the workpiece **2** and a further object **21.** The depicted CMM comprises an internal perception sensor **78,781** arranged or integrated to the CMM **1.** By way of example one of the sensors is a proximity sensor **78** e.g., a lidar or an ultrasonic sensor or a range-imaging camera, arranged near the probe **5.** Alternatively, the proximity sensor **78** might be arranged in the rotating part of the base and rotates with the base such that the probe **5** is in the field of view of the proximity sensor **78.** The other internal perception sensor **781** is a high field of view camera arranged at one of the joints. The internal perception sensors **78,781** are configured to provide spatial arrangement data **88** - shown as an insert - regarding the objects **2,21** in environment of the CMM **1.** While not shown, the depicted CMM **1** might be configured to obtain the workpiece model data regarding the workpiece **2** based on said spatial arrangement data **88.**

Alternatively or additionally, the CMM **1** might be configured to access data from an external perception sensor **79,** depicted as a laser tracker, external to the CMM **1.** The external perception sensor **79** is configured to provide spatial arrangement data **88** regarding the objects **2,21** in environment and the CMM **1.** The depicted CMM **1** comprises a tracking area **791** configured to aid the tracking of the CMM **1.** Alternative tracking methods, in particular camera-based methods are also possible according to the invention.

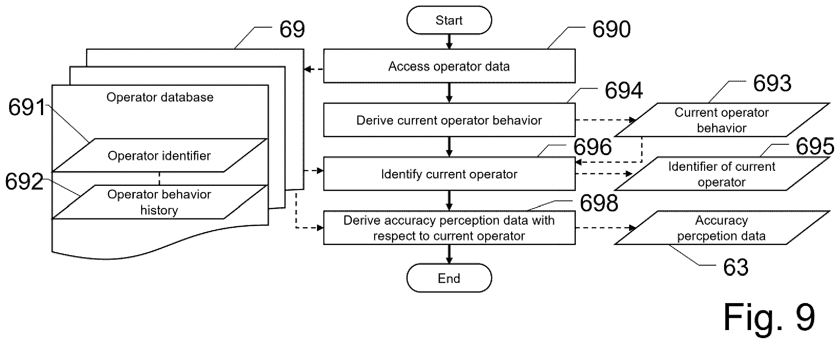

Figure 9 depicts the performance of the measurement task based on an operator database **69** comprising an operator identifier **691** and associated data regarding a history of operator behavior **692.** In a first step the operator database **69** is accessed **690.** Then the current operator behavior **693** is derived **694.** This can be realized by analyzing the typical measurement poses or measurement gestures performed by the operator. By way of example, typical measurement gestures/patterns might be different for taller operator than a shorter one. A more experienced operator might provide more delicate gestures and guide the probe with less force and generally more effectively. The grip of some operators might be firmer, especially during the performance of specific measurement gestures. By comparing the current operator behavior **693** with the history of operator behavior **692** the current operator **695** is identified **696.** Alternatively, the identifier of the current operator **695** might be provided manually. The accuracy-perception-data **63** is provided **698** further based on current operator behavior **693** and of the history of operator behavior **692.** Additionally or alternatively, the support-action is also provided with respect to the current operator behavior **693** and of the history of operator behavior **692.** In other words, the support-action can be provided with respect of the preferred measurement gestures/patterns.

It is clear to the skilled person that the depicted embodiments of the accuracy-optimization-functionality and/or the user-support-functionality focuses on specific aspects and can be combined with each other and/or with other functionalities of the control software and hardware of the CMM.

Although the invention is illustrated above, partly with reference to some specific embodiments, it must be understood that numerous modifications and combinations of different features of the embodiments can be made. All of these modifications lie within the scope of the appended claims.

## Claims

1. Articulated arm coordinate measuring machine (1) comprising a set of sensors (70-75), a probe (5) for approaching an object point (20), and a set of members (11-15,121,141) connecting the probe (5) to a base (10), the members comprising links (121,141) and joints (11-15), wherein
- the probe (5) is configured
∘ to be moved at least partially manually by an operator holding and guiding the probe (5) and/or a handheld member (141) of the set of members (11-15,121,141), and
∘ to measure (850) probing data (85) corresponding to an interaction between the probe (5) and the object point (20),
- the coordinate measuring machine (1) is configured
∘ to derive (860) a pose (86) of the probe (5) based on sensor data (87) provided by the set of sensors (70-75), and
∘ to provide (820) coordinate data (82) of the object point (20) based on the probing data (85) and the pose (86) of the probe (5),
**characterized in that**
- the coordinate measuring machine (1) is configured
∘ to obtain (610) target data (61) representing a target state of at least one state variable of the coordinate measuring machine (1),
∘ to derive (620) actual data (62) representing an actual state of said at least one state variable based on the sensor data (87), and
∘ to continuously monitor the actual data (62),
- the coordinate measuring machine (1) comprises
∘ an accuracy-assessment-functionality (6) being configured to provide (630) accuracy-perception-data (63) based on the continuously monitored actual data (62) and the target data (61) during the guiding of the probe (5) and/or the handheld member (141), and
∘ a user-support-functionality (60) being configured to provide (640) a support action (64) during the guiding of the probe (5) and/or the handheld member (141) based on the accuracy-perception-data (63).

2. The coordinate measuring machine (1) according to claim 1, further comprising an accuracy-optimization-functionality (600) being configured
- to access (660) a training database (66) comprising training data (669) regarding a plurality of recorded pose uncertainties (661) associated with corresponding recorded states (662) of at least one state variable,
- to derive (666) a model pose uncertainty (664) associated with at least one nonrecorded state (665) of the at least one state variable, and
- to derive (610) the target data (61) based on the training database (66),
wherein the derived target data (61) is associated with one recorded pose uncertainty (661) or one model pose uncertainty (664) below an uncertainty threshold (667).

3. The coordinate measuring machine (1) according to claim 2, wherein
- the training database (66) comprises training data (669) regarding a plurality of recorded pose uncertainties (661) associated with corresponding recorded states (662) of sets of state variables, the set of state variables comprising a plurality of state variables,
- the accuracy-optimization-functionality (600) is configured
∘ to derive at least one model pose uncertainty (664) associated with at least one nonrecorded state (665) of the set of state variables,
∘ to derive (610) a target state (61) of the plurality of state variables based on the training database (66).

4. The coordinate measuring machine (1) according to any one of claims 2 to 3, comprising a neural network and/or being configured to establish an operative coupling with a neural network, the neural network being configured to execute the computational steps of the accuracy-assessment-functionality (6) and/or the accuracy-optimization-functionality (600).

5. The coordinate measuring machine (1) according to any one of the preceding claims, wherein
- the coordinate measuring machine (1) comprises an operator action sensor (4) configured to provide data regarding a force (401) and/or a torque exerted by the operator on the probe (5) and/or the handheld member (141),
- the target data (61) comprise data corresponding to a force and/or torque threshold (615), and
- the actual data (62) comprise data corresponding to the measured force (401) and/or torque exerted by the operator,
in particular wherein the support action (64) comprises a warning (641) of excessive force and/or torque exerted by the operator.

6. The coordinate measuring machine (1) according to claim 5, wherein
- the operator action sensor (4) comprises a grip surface (42) configured to be held by the operator during the guiding of the probe (5) and/or the handheld member (141),
- the target data (61) comprise data corresponding to
∘ a grip threshold (611), and
∘ a rate of change threshold (613), in particular wherein the rate of change threshold (613) corresponds to a linear or angular velocity of the probe (5),
- the actual data (62) comprise data corresponding to
∘ the measured force (401) and/or torque exerted by the operator, and
∘ the measured rate of change (621) of the pose (86) of the probe (5),
in particular wherein the support action (64) comprises a suggestion (642) for an amended grip by the operator.

7. The coordinate measuring machine (1) according to any one of the preceding claims, wherein
- the coordinate measuring machine (1) is configured to derive an orientation of at least one link (121,141) from the set of members based on the sensor data (87),
- the target data (61) comprises data corresponding to a target orientation or orientation domain of said link (121,141),
- the actual data (62) comprises data corresponding to a measured orientation of said link (121,141),
in particular wherein the support action (64) comprises a warning of non-optimal orientation of the link (121,141).

8. The coordinate measuring machine (1) according to claim 7, being further configured
- to obtain (670) workpiece model data (67),
- to perform a matching (822) of measured coordinate data (82) of a set of object points (20) with the workpiece model data (67),
- to provide (824) an assessment regarding a predicted object point (823) based on said matching (822),
- to provide (826) a predicted pose (825) of at least one monitored member from the set of members (11-15,121,141) based on the predicted object point (823),
wherein
- the target data (61) comprises data corresponding to a target path (827) towards the predicted pose (825) of the monitored member,
- the actual data (62) comprises data corresponding to a measured or modelled actual pose (861) of the monitored member,
in particular wherein
- the target data (61) is provided by the accuracy-optimization-functionality (600), and/or
- the support action (64) comprises
∘ an orientation aid to guide the probe (5) and/or the handheld member (141) of the set of members (11-15,121,141) to realize target path towards the predicted pose (825) of the monitored member, and/or
∘ a workpiece placement aid comprising a suggested placement of the workpiece (2) relative to the coordinate measuring machine (1), and/or
∘ a workpiece identification and an object point aid based on the detected workpiece (2) comprising a suggested object point on the workpiece, in particular wherein the suggested object point corresponds to a stored object point from a stored measurement.

9. The coordinate measuring machine (1) according to claim 8, wherein
- the coordinate measuring machine (1) comprises an internal perception sensor (78,781) arranged or integrated to the coordinate measuring machine (1),
- the internal perception sensor (78,781) is configured to provide spatial arrangement (88) data regarding an environment of the coordinate measuring machine (1),
in particular wherein the coordinate measuring machine (1) is configured to obtain the workpiece model data (67) based on the spatial arrangement data (88).

10. The coordinate measuring machine (1) according to any one of claims 8 to 9, being configured
- to access data from an external perception sensor (79) external to the coordinate measuring machine (1), the external perception sensor (79) being configured to provide spatial arrangement data (88) regarding the environment of the coordinate measuring machine (1), and
- to obtain the workpiece model data (67) based on the spatial arrangement data (88).

11. The coordinate measuring machine (1) according to any one of claims 9 to 10 comprising a crash-protection functionality, wherein the crash-protection functionality is configured to provide an assessment regarding a collision of at least one member (11-15,121,141) with an object (2,21) in the environment based on the spatial arrangement data (88) and the predicted pose of the at least one member, in particular wherein the coordinate measuring machine (1) comprises a brake configured to hinder, or to lock, the movement of at least one braked member based on the assessment regarding a collision of at least one member.

12. The coordinate measuring machine (1) according to any one of the preceding claims, wherein
- the coordinate measuring machine (1) comprises at least one motorized member (111) and a servo-functionality
- the motorized member (111) is configured to provide a servo-torque, and
- the servo-functionality is configured to set the servo-torque with respect of the actual and predicted pose of the monitored member.

13. The coordinate measuring machine (1) according to any one of the preceding claims, wherein
- the set of sensors (70-75) comprises a temperature sensor,
- the at least one state variable is a temperature of at least one member (11-15,121,141) and/or a temperature of the probe (5), and
- the support action (64) comprises a suggestion for an amended grip by the operator.

14. The coordinate measuring machine (1) according to any one of the preceding claims, wherein
- the coordinate measuring machine (1) is configured to access (690) an operator database (69),
- the operator database (69) comprises an operator identifier (691) and data regarding a history of operator behavior (692),
- the coordinate measuring machine (1) is configured to associate (696) a current operator (695) with one of the operator identifiers (691), in particular automatically based on a comparison of current operator behavior (693) with the history of operator behavior (692), and
- the accuracy-perception-data (63) is provided (630) further on the basis of current operator behavior (693) and of the history of operator behavior (692).

15. The coordinate measuring machine (1) according to claim 14 being configured
- to record the current operator behavior (693),
- to adapt the history of operator behavior (692) based on the recorded current operator behavior (693),
in particular to provide an assessment regarding an evolution of the operator behavior (693).
